(19) Europäisches Patentamt
European Patent Office
Office européen des brevets

(11) **EP 3 499 710 A1**

(12) **EUROPÄISCHE PATENTANMELDUNG**

(43) Veröffentlichungstag:
**19.06.2019 Patentblatt 2019/25**

(51) Int Cl.:
*H02P 29/00* (2016.01)    *G01P 3/48* (2006.01)

(21) Anmeldenummer: **17207715.8**

(22) Anmeldetag: **15.12.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **Siemens Aktiengesellschaft
80333 München (DE)**
(72) Erfinder:
 • **Hain, Stefan
  91090 Effeltrich (DE)**
 • **Götz, Jürgen
  91315 Höchstadt/Aisch (DE)**
 • **Meierhöfer, Franz
  91241 Kirchensittenbach (DE)**
 • **Villnow, Michael
  90765 Fürth (DE)**

(54) **VERFAHREN ZUM ÜBERWACHEN DES BETRIEBES EINER ELEKTRISCHEN ROTIERENDEN MASCHINE**

(57) Die Erfindung betrifft ein Verfahren zum Überwachen des Betriebes einer elektrischen rotierenden Maschine (2), insbesondere einer Asynchronmaschine, mit einem Rotor (8), einem Stator (10) und einem Maschinengehäuse (26), in dem der Rotor (8) und der Stator (10) aufgenommen sind. Damit das Überwachungsverfahren möglichst einfach und ohne konstruktive Änderungen an der elektrischen rotierenden Maschine (2) durchführbar ist, wird vorgeschlagen, dass eine Schlupffrequenz (f$\Delta$) und eine Synchronfrequenz (fs) durch Erfassung eines magnetischen Streufeldes außerhalb des Maschinengehäuses (18) ermittelt werden, wobei aus der Schlupffrequenz (f$\Delta$) und der Synchronfrequenz (fs) ein Drehmoment (M) und/oder eine Läuferdrehfrequenz (D) ermittelt werden.

FIG 2

EP 3 499 710 A1

**Beschreibung**

Die Erfindung betrifft ein Verfahren zum Überwachen des Betriebes einer elektrischen rotierenden Maschine, insbesondere einer Asynchronmaschine, mit einem Rotor, einem Stator und einem Maschinengehäuse, in dem der Rotor und der Stator aufgenommen sind.

Des Weiteren betrifft die Erfindung eine Steuereinheit mit Mitteln zur Durchführung eines derartigen Verfahrens.

Darüber hinaus betrifft die Erfindung ein Sensorsystem für eine elektrische rotierende Maschine.

Überdies betrifft die Erfindung eine elektrische rotierende Maschine mit einem Rotor, einem Stator, einem Maschinengehäuse, in das der Rotor und der Stator aufgenommen sind, und mindestens einem Sensorsystem.

Ferner betrifft die Erfindung ein Computerprogramm zur Durchführung eines derartigen Verfahrens.

Zudem betrifft die Erfindung ein Computerprogrammprodukt mit einem Computerprogramm gelöst.

Bei der Überwachung des Betriebes einer elektrischen rotierenden Maschine werden Zustandsgrößen, beispielsweise ein abgegebenes Drehmoment, eine abgegebene mechanische Leistung oder ein Energieverbrauch, in bestimmten Intervallen überprüft, um beispielsweise Wartungsintervalle zu koordinieren oder bei Bedarf frühzeitig Gegenmaßnahmen einzuleiten. Eine elektrische rotierende Maschine ist beispielsweise ein Motor oder ein Generator. Die Ermittlung derartiger Zustandsgrößen erfordert einen hohen messtechnischen Aufwand, insbesondere wenn die elektrische rotierende Maschine ohne einen Frequenzumrichter oder ein Motormanagement- und/oder Steuergerät betrieben wird.

Zur Ermittlung eines abgegebenen Drehmoments wird beispielsweise ein spezieller Drehmomentsensor an einer Welle der elektrischen rotierenden Maschine montiert. Die Patentschrift EP 0 974 822 B1 beschreibt einen Drehmomentsensor mit einem ersten Signalgeber, dessen Ausgangssignal sich in Abhängigkeit von einem Drehmoment ändert, einem zweiten Signalgeber, dessen Ausgangssignal sich in Abhängigkeit von dem Drehmoment gegenläufig ändert, und einer Auswerteeinrichtung, die eine Summiereinrichtung aufweist, die mit den beiden Signalgebern verbunden ist.

Alternativ wird der Motorstrom mittels Stromwandlern gemessen und mit Hilfe einer geeigneten Auswerteelektronik in seine Wirk- und Scheinanteile zerlegt. Die Patentschrift
EP 0 800 265 B1 beschreibt ein Verfahren zur direkten Drehmomentregelung einer Drehfeldmaschine mit einem mehrphasigen Umrichter, wobei ein Fluss-Istwert aus einer Umrichterspannung und einer Korrekturgröße berechnet wird und wobei Drehmoment-Istwerte aus einem vom Umrichter abgegebenen Strom und dem Fluss-Istwert berechnet wird.

Die Patentschrift DE 3 722 805 C2 beschreibt ein Verfahren zur Überwachung des Betriebszustandes eines im untertägigen Bergbau eingesetzten Asynchon-Motors, durch Ermittlung einer Drehzahl aus einer induktiv gemessenen Schlupffrequenz unter Berücksichtigung einer vom Hersteller angegebenen Drehzahl-Drehmoment-Leistungskennlinie.

Der Erfindung liegt die Aufgabe zugrunde, ein Verfahren zum Überwachen des Betriebes einer elektrischen rotierenden Maschine bereitzustellen, welches möglichst einfach ohne konstruktive Änderungen an der elektrischen rotierenden Maschine durchführbar ist.

Die Aufgabe wird erfindungsgemäß durch ein Verfahren zum Überwachen des Betriebes einer elektrischen rotierenden Maschine, insbesondere einer Asynchronmaschine, mit einem Rotor, einem Stator und einem Maschinengehäuse, in dem der Rotor und der Stator aufgenommen sind, gelöst, wobei eine Schlupffrequenz und eine Synchronfrequenz durch Erfassung eines magnetischen Streufeldes außerhalb des Maschinengehäuses ermittelt werden und wobei aus der Schlupffrequenz und der Synchronfrequenz ein Drehmoment und/oder eine Läuferdrehfrequenz ermittelt werden.

Ferner wird die Aufgabe erfindungsgemäß durch eine Steuereinheit mit Mitteln zur Durchführung eines derartigen Verfahrens gelöst.

Darüber hinaus wird die Aufgabe erfindungsgemäß durch ein Sensorsystem für eine elektrische rotierende Maschine mit mindestens einer Sensorvorrichtung und einer Steuereinheit zur Durchführung eines derartigen Verfahrens gelöst.

Des Weiteren wird die Aufgabe erfindungsgemäß durch eine elektrische rotierende Maschine mit einem Rotor, einem Stator, einem Maschinengehäuse, in das der Rotor und der Stator aufgenommen sind, und mindestens einem Sensorsystem gelöst, wobei das Sensorsystem mindestens eine Sensorvorrichtung aufweist, welche außerhalb des Maschinengehäuses angeordnet ist.

Überdies wird die Aufgabe erfindungsgemäß durch ein Computerprogramm zur Durchführung eines derartigen Verfahrens bei Ablauf in einer Steuereinheit gelöst.

Zudem wird die Aufgabe erfindungsgemäß durch ein Computerprogrammprodukt mit einem Computerprogramm gelöst.

Die in Bezug auf das Verfahren nachstehend angeführten Vorteile und bevorzugten Ausgestaltungen lassen sich sinngemäß auf die Steuereinheit, das Sensorsystem, die elektrische rotierende Maschine und das Computerprogramm übertragen.

Der Erfindung liegt die Überlegung zugrunde, ein Drehmoment und/oder eine Läuferdrehfrequenz einer elektrischen rotierenden Maschine über eine Schlupffrequenz und eine Synchronfrequenz zu ermitteln. Unter einer Synchronfrequenz ist eine Drehfrequenz eines Rotors zu verstehen, welcher sich synchron zu einem Drehfeld des Stators bewegt. Daher entspricht die Synchronfrequenz der Frequenz des Statordrehfeldes.

Eine Differenzfrequenz aus der Frequenz des Statordrehfeldes und der Drehfrequenz des Rotors wird als Schlupffrequenz bezeichnet. Die Schlupffrequenz ist ungleich Null, wenn sich der Rotor nicht synchron zum Drehfeld des Stators dreht, was beispielsweise bei einer Asynchronmaschine der Fall ist. Beispielsweise auch bei einer Änderung der Frequenz des Statordrehfeldes einer Synchronmaschine ist die Schlupffrequenz durch die Trägheit des Rotors zumindest temporär ungleich Null.

Die Schlupffrequenz und die Synchronfrequenz werden mittels eines magnetischen Streufeldes außerhalb eines Maschinengehäuses, welches den Rotor und den Stator umgibt und beispielsweise aus einem metallischen Werkstoff gefertigt wird, erfasst, sodass keine konstruktiven Änderungen an der elektrischen rotierenden Maschine erforderlich sind.

Durch eine Steuereinheit wird ein Verfahrensablauf zur Erfassung der Schlupffrequenz und der Synchronfrequenz sowie der Ermittlung eines Drehmoments und/oder einer Läuferdrehfrequenz aus den erfassten Parametern gesteuert. Die Mittel zur Durchführung eines derartigen Verfahrens umfassen ein Computerprogramm und beispielweise einen Mikrocontroller oder einen anderen programmierbaren Logikbaustein. Die Steuereinheit ist beispielsweise in der Sensorvorrichtung an der elektrischen rotierenden Maschine angeordnet.

In einer bevorzugten Ausgestaltung werden die Schlupffrequenz und die Synchronfrequenz direkt gemessen. Darunter ist zu verstehen, dass die Schlupffrequenz und die Synchronfrequenz unmittelbar und ohne eine Frequenzkonversion messtechnisch erfasst werden. Eine derartige Messung ist einfach und kostengünstig zu realisieren.

In einer weiteren vorteilhaften Ausgestaltung werden die Schlupffrequenz und die Synchronfrequenz gleichzeitig gemessen. Durch eine gleichzeitige Messung wird die Messdauer verkürzt, was sich positiv auf den Energieverbrauch der verwendeten Schaltungen auswirkt. Insbesondere bei der Verwendung einer Batterie oder eines Akkus zur Versorgung der Sensorvorrichtung wird eine Laufzeit der Batterie oder des Akkus durch einen geringeren Energieverbrauch erhöht.

In einer bevorzugten Ausgestaltung werden die Schlupffrequenz und die Synchronfrequenz über eine gemeinsame Spule, insbesondere eine Luftspule, welche einer Sensorvorrichtung zugeordnet ist, gemessen. Eine Luftspule ist einfach und kostengünstig herzustellen. Durch die Verwendung einer gemeinsamen Spule wird ein erforderlicher Platzbedarf der Sensorvorrichtung verringert.

Besonders vorteilhaft ist die Sensorvorrichtung radial mit dem Maschinengehäuse verbunden. Unter einer radialen Verbindung ist eine Befestigung auf einer parallel zur Rotationsachse verlaufenden und den Stator in Tangentialrichtung umgebenden Außenfläche des Maschinengehäuses zu verstehen. Beispielsweise erfolgt eine Befestigung an zumindest einer in Axialrichtung verlaufenden Kühlrippe des Maschinengehäuses. Eine derartige radiale Befestigung ist platzsparend und ermöglicht eine energieeffiziente Messung.

Vorteilhaft wird ein Spannungssignal der Schlupffrequenz und der Synchronfrequenz durch Integration eines von der Spule empfangenen magnetischen Wechselfeldes ermittelt. Eine Integration wird beispielsweise durch eine Integrationsschaltung durchgeführt. Durch Integration wird einfach und kostengünstig ein Spannungssignal aus dem von der Spule empfangenen magnetischen Wechselfeld erzeugt.

In einer weiteren vorteilhaften Ausgestaltung werden die Schlupffrequenz und die Synchronfrequenz über eine Frequenzweiche voneinander getrennt und anschließend separat digitalisiert. Mit Hilfe einer Frequenzweiche werden elektrische Signale frequenzselektiv aufgesplittet. Eine Frequenzweiche weist beispielsweise ein Tiefpassfilter und ein Hochpassfilter auf. Zusätzlich oder alternativ umfasst die Frequenzweiche mindestens ein Bandpassfilter. Die anschließende Digitalisierung erfolgt beispielsweise mit mindestens einem Analog-Digital-Umsetzer, kurz ADU. Durch eine Trennung mit anschließender separater Digitalisierung wird eine unabhängige und verlustarme Verarbeitung der gemessenen Signale der Schlupffrequenz und der Synchronfrequenz ermöglicht.

Besonders vorteilhaft wird das Drehmoment aus der Schlupffrequenz, der Synchronfrequenz und mindestens einer motorspezifischen Kenngröße ermittelt. Die motorspezifische Kenngröße liegt beispielsweise als Konstante oder als zumindest eine Kennlinie vor. Mit Hilfe der motorspezifischen Kenngröße wird eine höhere Genauigkeit bei der Ermittlung des Drehmoments erreicht.

Besonders vorteilhaft wird zur Ermittlung der motorspezifischen Kenngröße mindestens eine Temperatur der elektrischen rotierenden Maschine gemessen. Insbesondere liegt die motorspezifische Kenngröße als eine zumindest temperaturabhängige Kennlinie vor. Durch eine Temperaturmessung wird eine optimale Genauigkeit bei der Ermittlung des Drehmoments erreicht.

In einer bevorzugten Ausgestaltung werden die Schlupffrequenz und die Synchronfrequenz mit einer FFT und/oder mit einem Frequenzzählverfahren ermittelt. Unter einer FFT ist eine Fast Fourier Transformation zu verstehen, mit deren Hilfe das gemessene Schwingungssignal in den Frequenzbereich transformiert wird. Eine Darstellung der insbesondere näherungsweise konstanten Schlupffrequenz und Synchronfrequenz erfolgt nach der FFT in Form einer Spektrallinie im Frequenzbereich. Durch die Verwendung einer FFT lassen sich die Schlupffrequenz und die Synchronfrequenz im Frequenzbereich mit hoher Genauigkeit ermitteln. Bei einem Frequenzzählverfahren wird eine Frequenz eines insbesondere periodischen Signals, durch Zählen, beispielsweise von Nulldurchgängen, ermittelt. Durch das Frequenzzählverfahren wird eine Frequenz energieeffizient ermittelt.

In einer weiteren vorteilhaften Ausgestaltung wird zumindest ein Teil der digitalen Signalverarbeitung in einer Cloud durchgeführt. Eine Cloud ist eine IT-Infrastruktur, in der beispielsweise Speicherplatz, Rechenleistung und Anwendungssoftware als Dienstleistung über das Internet bereitgestellt werden. Durch eine Verlagerung zumindest eines Teils der digitalen Signalverarbeitung in eine Cloud wird die Leistungsaufnahme der Komponenten im Bereich der elektrischen rotierenden Maschine verringert.

Im Folgenden wird die Erfindung anhand der in den Figuren dargestellten Ausführungsbeispiele näher beschrieben und erläutert.

Es zeigen:

FIG 1     einen Längsschnitt einer elektrischen rotierenden Maschine mit einer Sensorvorrichtung,

FIG 2     ein Blockschaltbild einer ersten Ausführungsform eines Sensorsystems,

FIG 3     ein Ablaufdiagramm eines Verfahrens zur Ermittlung einer Motorleistung,

FIG 4     ein Blockschaltbild einer zweiten Ausführungsform eines Sensorsystems.

Gleiche Bezugszeichen haben in den verschiedenen Figuren die gleiche Bedeutung.

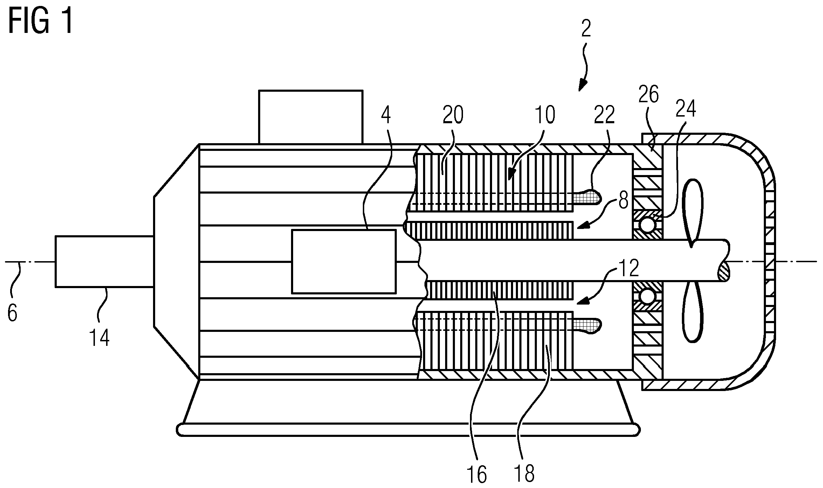

FIG 1 zeigt einen Längsschnitt einer elektrischen rotierenden Maschine 2 mit einer ersten Ausführungsform einer Sensorvorrichtung 4. Die elektrische rotierende Maschine 2 ist als Asynchronmaschine ausgeführt und weist einen um eine Rotationsachse 6 rotierbaren Rotor 8 und einen den Rotor 8 umgebenden Stator 10 auf, wobei sich zwischen dem Rotor 8 und dem Stator 10 ein Spalt 12, der insbesondere als Luftspalt ausgeführt ist, befindet. Die Rotationsachse 6 definiert eine Axialrichtung und eine Radialrichtung. Der Rotor 8 umfasst eine Welle 14 und ein Rotorblechpaket 16. Der Stator 10 umfasst ein Statorblechpaket 18 mit Statorwicklungen 20, wobei das Statorblechpaket 18 aus einer Vielzahl von geschichteten Elektroblechen aufgebaut ist. Die Statorwicklungen 20 verlaufen in Axialrichtung durch das Statorblechpaket 18 und bilden an den axialen Enden des Statorblechpakets 18 Wickelköpfe 22 aus. Die Welle 14 des Rotors 8 ist über Lager 24 gelagert. Der Rotor 8 und der Stator 10 sind in einem geschlossenen Maschinengehäuse 26 untergebracht.

Die Sensorvorrichtung 4 ist seitlich radial am Maschinengehäuse 26 angeordnet, wobei ein im Wesentlichen geschlossenes Gehäuse der Sensorvorrichtung 4 lösbar mit dem Maschinengehäuse 26 verbunden ist Die Sensorvorrichtung wird beispielsweise über eine Batterie oder über einen Akku mit Energie versorgt. Da zum Betrieb der Sensorvorrichtung 4 keine Modifikationen an der elektrischen rotierenden Maschine 2 erforderlich sind, ist die Sensorvorrichtung 4 nachrüstbar.

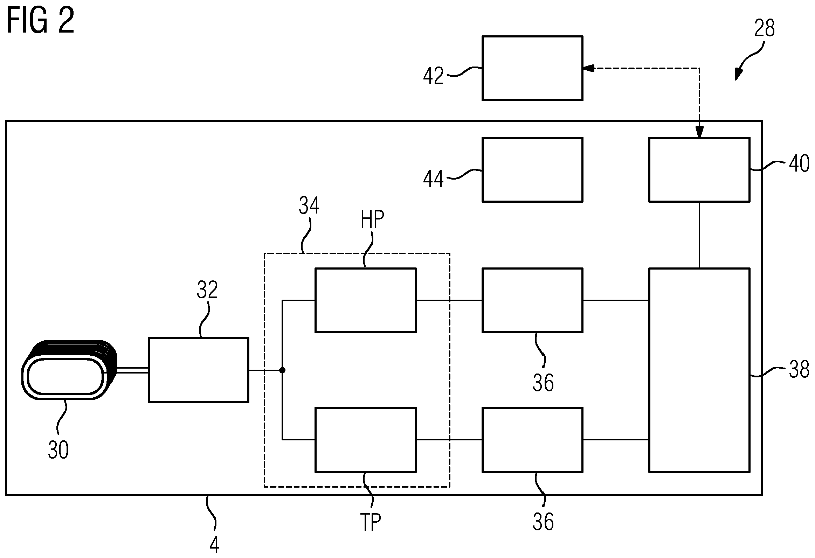

FIG 2 zeigt ein Blockschaltbild einer ersten Ausführungsform eines Sensorsystems 28, welches eine Sensorvorrichtung 4 umfasst. Die Sensorvorrichtung 4 weist eine Spule 30 auf, welche im Bereich einer Mantelfläche des im Wesentlichen zylinderförmigen Maschinengehäuses 26 angeordnet ist. Die Spule 30 ist derart ausgestaltet, dass sich eine optimale Gesamtintegrationsfläche ergibt, wobei die Gesamtintegrationsfläche als Produkt aus einer Windungszahl und einer Windungsfläche der Spule 30 definiert ist. Beispielsweise ist die Spule 30 als Luftspule aus einem Backlackdraht ausgeführt, bei der eine Spulenfläche möglichst groß gewählt wird. Allerdings ist die Spule 30 in tangentialer Richtung des Maschinengehäuses 26 kleiner als ein Abstand gleicher Pole der elektrischen rotierenden Maschine 2. Alternativ wird die Spule 30 in eine, insbesondere mehrlagige, Leiterplatte integriert, sodass keine weiteren Verbindungen, beispielsweise über Lötstellen und/oder Stecker, erforderlich sind. Über die Spule 30 wird ein magnetisches Wechselfeld in einem Streufeld der elektrischen rotierenden Maschine 2 außerhalb des Maschinengehäuses 26 erfasst, wobei das magnetische Wechselfeld eine Schlupffrequenz f$\Delta$ und eine Synchronfrequenz fs beinhaltet. Die Schlupffrequenz f$\Delta$ liegt in einem Bereich bis 5 Hz, die Synchronfrequenz fs entspricht dem elektrischen Drehfeld des Ständers, welches beispielsweise bei 50 Hz liegt. Durch die Spule 30 sind die Schlupffrequenz f$\Delta$ und die Synchronfrequenz fs direkt und gleichzeitig messbar.

Die Spule 30 ist mit einer Integrationsschaltung 32 verbunden, durch welche ein Spannungssignal der Schlupffrequenz f$\Delta$ und der Synchronfrequenz fs durch Integration des von der Spule 30 empfangenen magnetischen Wechselfeldes erzeugt wird. Die Integrationsschaltung 32 weist eine differentielle Schaltungstopologie auf, um die Rauschzahl der Schaltung zu reduzieren und die Robustheit gegenüber Gleichtaktstörungen zu erhöhen. Die Verstärkung der Integrationsschaltung 32 ist einstellbar, da eine Feldstärke des Streufeldes je nach Maschinentyp, Bauform oder Ausführungsvariante möglicherweise stark variiert. Über eine Frequenzweiche 34 werden die Schlupffrequenz f$\Delta$ und die Synchronfrequenz fs voneinander getrennt. Die Frequenzweiche 34 weist ein Tiefpassfilter TP auf, welches für die Schlupffrequenz f$\Delta$ durchlässig ist und die Synchronfrequenz fs sperrt. Darüber hinaus weist die Frequenzweiche 34 ein Hochpassfilter HP auf, welches für die Synchronfrequenz fs durchlässig ist und die Schlupffrequenz f$\Delta$ sperrt. Die Filtercharakteristik des Tiefpassfilters TP ist so zu wählen, dass die dominierenden Frequenzanteile des elektrischen Ständerdrehfeldes möglichst stark unterdrückt werden. Zusätzlich oder alternativ umfasst die Frequenzweiche 34 mindestens ein Bandpassfilter.

Die Ausgänge der Filter (TP, BP) der Frequenzweiche 34 sind jeweils mit einem Analog-Digital-Umsetzer 36, kurz ADU, verbunden. Die Abtastrate der ADUs 36 wird auf ein Minimum reduziert werden, um, beispielsweise für eine Erhöhung einer Batterie- oder Akkulaufzeit, Energie zu sparen und dabei die Nyquist-Bedingung nicht zu verletzen. Alternativ wird die Synchronfrequenz fs, welche ein kontinuierliches bandbegrenztes Signal ist, mit einer Bandpassunterabtastung abgetastet. Bei einer derartigen Bandpassunterabtastung wird das Hochpassfilter HP durch ein geeignetes Bandpassfilter ersetzt. Alternativ zu den beiden ADUs 36 wird ein gemeinsamer ADU 36 mit mehreren Kanälen verwendet. Die von den ADUs 36 digitalisierten Signale, welche die Schlupffrequenz f$\Delta$ und die Synchronfrequenz fs enthalten, werden in einer Recheneinheit 38 weiterverarbeitet. Die Recheneinheit 38 ist beispielsweise als Mikrocontroller ausgeführt. Nach der Weiterverarbeitung der digitalisierten Signale durch die Recheneinheit 38 werden diese über eine Kommunikationseinheit 40 an eine Cloud 42 gesendet. Eine Cloud 42 ist eine IT-Infrastruktur, in der beispielsweise Speicherplatz, Rechenleistung und Anwendungssoftware als Dienstleistung über das Internet bereitgestellt werden. Zusätzlich oder alternativ werden die digitalisierten Daten an ein lokales Computersystem gesendet. Die digitale Datenübertragung an die Cloud 42 und/oder an das lokale Computersystem findet drahtlos, drahtgebunden oder optisch statt. Beispielsweise werden die Daten über Bluetooth oder WLAN übertragen.

Die Schlupffrequenz f$\Delta$ und die Synchronfrequenz fs werden mit Hilfe digitaler Signalverarbeitung, beispielsweise mit einer FFT und/oder mit einem Frequenzzählverfahren, in der Recheneinheit 38 oder in der Cloud 42 ermittelt. Aus der Schlupffrequenz f$\Delta$ und die Synchronfrequenz fs werden ein Drehmoment M und/oder eine Läuferdrehfrequenz D der elektrischen rotierenden Maschine 2 ermittelt. Aus dem Drehmoment M und der Läuferdrehfrequenz D ist eine Motorleistung P der elektrischen rotierenden Maschine 2 ermittelbar. Durch eine Steuereinheit 44, welche der Recheneinheit 38 zugewiesen ist, wird der Verfahrensablauf gesteuert. Optional befindet sich zumindest ein Teil der Steuereinheit 44 in der Cloud 42. Die weitere Ausführung der Sensorvorrichtung 4 in FIG 2 entspricht der in FIG 1.

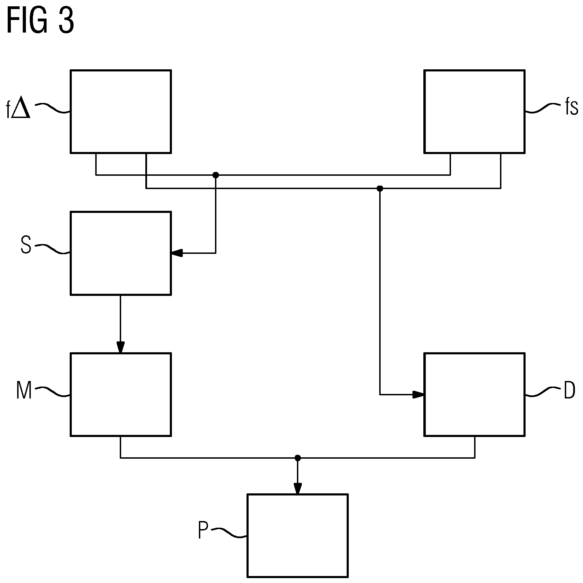

FIG 3 zeigt ein Ablaufdiagramm eines Verfahrens zur Ermittlung einer Motorleistung P aus der Schlupffrequenz und der Synchronfrequenz.

Aus der Schlupffrequenz f$\Delta$ und der Synchronfrequenz fs wird ein auf die Synchronfrequenz bezogener Schlupf S berechnet:

$$S = \frac{f\Delta}{fs}.$$

Ein aktuelles vom Motor abgegebenes Drehmoment M wird aus dem Schlupf S, beispielsweise nach der Kloß'schen Formel, errechnet:

$$M = M_k \cdot \frac{2}{\frac{S}{S_K} + \frac{S_K}{S}},$$

wobei $M_K$ das Kippmoment und $S_K$ den Kippschlupf bezeichnen. Das Kippmoment $M_K$ und der Kippschlupf $S_K$ sind motorspezifische Kenngrößen, welche der Recheneinheit 38 und/oder der Cloud 42 bereitgestellt werden. Alternativ zur Kloß'schen Formel wird eine analytisch oder empirisch ermittelte motorspezifische Kennlinie bereitgestellt.

Darüber hinaus wird eine Läuferdrehfrequenz D aus der Schlupffrequenz, der Synchronfrequenz und der Polpaarzahl berechnet:

$$D = \frac{fs - f\Delta}{Polpaarzahl}.$$

Aus dem Drehmoment M und der Läuferdrehfrequenz D wird daraufhin eine Motorleistung P ermittelt:

$$P = M \cdot 2\pi \cdot D.$$

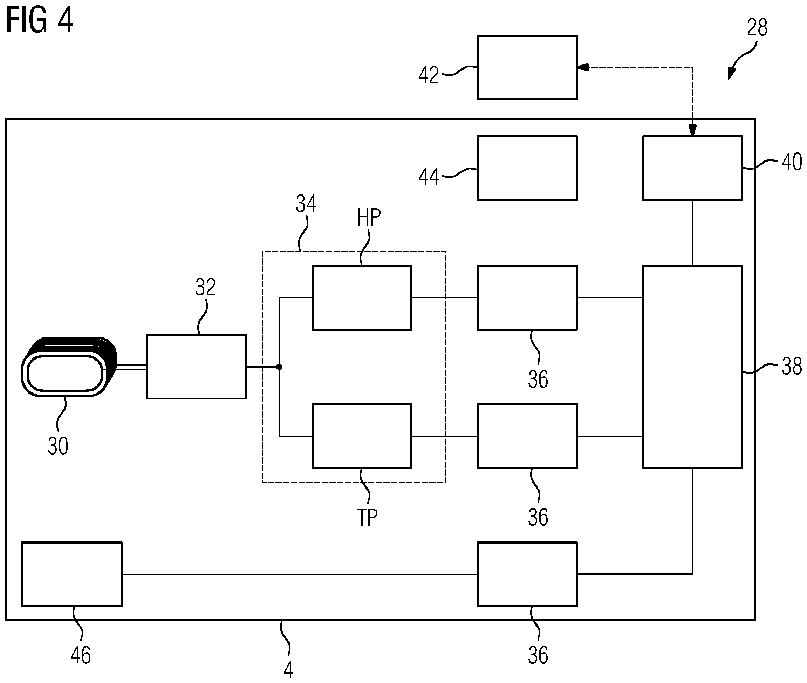

FIG 4 zeigt ein Blockschaltbild einer zweiten Ausführungsform eines Sensorsystems 28, welches einen weiteren Sensor 46, welcher als Temperatursensor ausgeführt ist, aufweist. Die ermittelten Sensordaten werden über einen ADU 36 digitalisiert und der Recheneinheit 38 zur Verfügung gestellt. Da die motorspezifischen Kenngrößen $M_k$ und $S_K$ der elektrischen rotierenden Maschine 2 temperaturabhängig sind, wird durch eine Temperaturmessung eine höhere Genauigkeit, beispielsweise bei der in FIG 3 gezeigten Berechnung des Drehmoments M, erreicht. Die weitere Ausführung der Sensorvorrichtung 4 in FIG 4 entspricht der in FIG 2.

Zusammenfassend betrifft die Erfindung ein Verfahren zum Überwachen des Betriebes einer elektrischen rotierenden Maschine 2, insbesondere einer Asynchronmaschine, mit einem Rotor 8, einem Stator 10 und einem Maschinengehäuse 26, in dem der Rotor 8 und der Stator 10 aufgenommen sind. Damit das Überwachungsverfahren möglichst einfach und ohne konstruktive Änderungen an der elektrischen rotierenden Maschine 2 durchführbar ist, wird vorgeschlagen, dass eine Schlupffrequenz f$\Delta$ und eine Synchronfrequenz fs durch Erfassung eines magnetischen Streufeldes außerhalb des Maschinengehäuses 18 ermittelt werden, wobei aus der Schlupffrequenz f$\Delta$ und der Synchronfrequenz fs ein Drehmoment M und/oder eine Läuferdrehfrequenz D ermittelt werden.

**Patentansprüche**

1. Verfahren zum Überwachen des Betriebes einer elektrischen rotierenden Maschine (2), insbesondere einer Asynchronmaschine, mit einem Rotor (8), einem Stator (10) und einem Maschinengehäuse (26), in dem der Rotor (8) und der Stator (10) aufgenommen sind,
wobei eine Schlupffrequenz (f$\Delta$) und eine Synchronfrequenz (fs) durch Erfassung eines magnetischen Streufeldes außerhalb des Maschinengehäuses (18) ermittelt werden und
wobei aus der Schlupffrequenz (f$\Delta$) und der Synchronfrequenz (fs) ein Drehmoment (M) und/oder eine Läuferdrehfrequenz (D) ermittelt werden.

2. Verfahren nach Anspruch 1,
wobei die Schlupffrequenz (f$\Delta$) und die Synchronfrequenz (fs) direkt gemessen werden.

3. Verfahren nach einem der Ansprüche 1 oder 2,
wobei die Schlupffrequenz (f$\Delta$) und die Synchronfrequenz (fs) gleichzeitig gemessen werden.

4. Verfahren nach einem der vorherigen Ansprüche,
wobei die Schlupffrequenz (f$\Delta$) und die Synchronfrequenz (fs) über eine gemeinsame Spule (30), insbesondere eine Luftspule, welche einer Sensorvorrichtung (4) zugeordnet ist, gemessen werden.

5. Verfahren nach Anspruch 4,
wobei die Sensorvorrichtung (4) radial mit dem Maschinengehäuses (26) verbunden ist.

6. Verfahren nach einem der Ansprüche 4 oder 5,
wobei ein Spannungssignal der Schlupffrequenz (f$\Delta$) und der Synchronfrequenz (fs) durch Integration eines von der Spule (30) empfangenen magnetischen Wechselfeldes ermittelt wird.

7. Verfahren nach einem der vorherigen Ansprüche,
wobei die Schlupffrequenz (f$\Delta$) und die Synchronfrequenz (fs) über eine Frequenzweiche (34) voneinander getrennt und anschließend separat digitalisiert werden.

8. Verfahren nach einem der vorherigen Ansprüche,
wobei das Drehmoment (M) aus der Schlupffrequenz (f$\Delta$), der Synchronfrequenz (fs) und mindestens einer motorspezifischen Kenngröße ($M_k$, $S_K$) ermittelt wird.

9. Verfahren nach Anspruch 8,
wobei zur Ermittlung der motorspezifischen Kenngröße ($M_k$, $S_K$) mindestens eine Temperatur der elektrischen rotierenden Maschine (2) gemessen wird.

10. Verfahren nach einem der vorherigen Ansprüche,
wobei die Schlupffrequenz (f$\Delta$) und die Synchronfrequenz (fs) mit einer FFT und/oder mit einem Frequenzzählverfahren ermittelt werden.

11. Verfahren nach einem der vorherigen Ansprüche,
wobei zumindest ein Teil der digitalen Signalverarbeitung in einer Cloud (42) durchgeführt wird.

12. Steuereinheit (44) mit Mitteln zur Durchführung eines Verfahrens nach einem der Ansprüche 1 bis 11.

13. Sensorsystem (28) für eine elektrische rotierende Maschine (2) mit mindestens einer Sensorvorrichtung (4) und einer Steuereinheit (44) zur Durchführung eines Verfahrens nach einem der Ansprüche 1 bis 11.

14. Sensorsystem (28) nach Anspruch 13,
wobei die Sensorvorrichtung (4) eine Integrationsschaltung (32) zur Ermittlung eines Spannungssignals der Schlupffrequenz (f$\Delta$) und der Synchronfrequenz (fs) aus einem empfangenen magnetischen Wechselfeld aufweist.

15. Sensorsystem (28) nach einem der Ansprüche 13 oder 14, wobei die Sensorvorrichtung (4) eine Frequenzweiche (34) aufweist,
wobei die Frequenzweiche (34) ein Tiefpassfilter (TP) und/oder ein erstes Bandpassfilter zur Filterung der Schlupffrequenz (f$\Delta$) und
ein Hochpassfilter (HP) und/oder ein zweites Bandpassfilter zur Filterung der Synchronfrequenz (fs) aufweist.

16. Sensorsystem (28) nach einem der Ansprüche 13 bis 15, wobei die Sensorvorrichtung (4) eine, insbesondere drahtlose, Kommunikationseinheit (40) zur Verbindung der Sensorvorrichtung (4) mit einer Cloud (42) aufweist.

17. Sensorsystem (28) nach einem der Ansprüche 13 bis 16, wobei die Sensorvorrichtung (4) mindestens einen weiteren Sensor (46), insbesondere einen Temperatursensor, zur Ermittlung mindestens einer motorspezifischen Kenngröße ($M_k$, $S_K$) der elektrischen rotierenden Maschine (2) aufweist.

18. Elektrische rotierende Maschine (2) mit einem Rotor (8), einem Stator (10), einem Maschinengehäuse (26), in das der Rotor (8) und der Stator (10) aufgenommen sind, und mindestens einem Sensorsystem (28) nach einem der Ansprüche 13 bis 17,
wobei das Sensorsystem (28) mindestens eine Sensorvorrichtung (4) aufweist, welche außerhalb des Maschinengehäuses (18) angeordnet ist.

19. Computerprogramm zur Durchführung eines Verfahrens nach einem der Ansprüche 1 bis 11 bei Ablauf in einer Steuereinheit (44) nach Anspruch 12.

20. Computerprogrammprodukt mit einem Computerprogramm nach Anspruch 19.

FIG 1

FIG 2

EP 3 499 710 A1

# FIG 3

FIG 4

Europäisches
Patentamt

European
Patent Office

Office européen
des brevets

**EUROPÄISCHER RECHERCHENBERICHT**

Nummer der Anmeldung

EP 17 20 7715

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 208 967 A1 (SIEMENS AG [DE]) 21. Januar 1987 (1987-01-21) | 1-3,5,7, 12,13, 15,18-20 | INV. H02P29/00 G01P3/48 |
| Y | * Spalte 2, Zeile 21 - Spalte 4, Zeile 17 | 4,10,17 | |
| A | * * Ansprüche 1, 2, 4, 6 * * Abbildungen 1, 2, 3 * ----- | 6,8,9, 11,14,16 | |
| X | WO 98/39718 A1 (EMERSON ELECTRIC CO [US]) 11. September 1998 (1998-09-11) * Seite 17, Zeilen 1-8 * * Seite 18, Zeilen 3-12 * * Seite 27, Zeile 14 - Seite 30, Zeile 15 * * Abbildungen 2A, 2B, 2C, 2D, 2E, 4, 5 * ----- | 1-3,5,7, 9,10,12, 13,15, 17-20 | |
| X | DE 10 2014 003119 A1 (RAMITEK GMBH [DE]; SAUER MICHAEL [DE]) 3. September 2015 (2015-09-03) * Absätze [0001] - [0006], [0008], [0017], [0018] * * Abbildungen 1, 2 * ----- | 1-5,12, 13,18 | |
| Y | CN 202 854 161 U (ZHAO XIAOLI) 3. April 2013 (2013-04-03) * wpi abstract * * Abbildung 1 * ----- | 4 | |
| Y | US 5 252 915 A (SEDDING HOWARD G [CA] ET AL) 12. Oktober 1993 (1993-10-12) * Spalte 7, Zeile 64 - Spalte 9, Zeile 4 * * Abbildung 5 * ----- | 10 | |
| Y | DE 10 2015 102581 A1 (INFINEON TECHNOLOGIES AG [DE]) 27. August 2015 (2015-08-27) * Absätze [0002], [0005], [0029] * ----- | 17 | |

RECHERCHIERTE SACHGEBIETE (IPC)

H02P
G01P

Der vorliegende Recherchenbericht wurde für alle Patentansprüche erstellt

| Recherchenort | Abschlußdatum der Recherche | Prüfer |
|---|---|---|
| München | 26. Juni 2018 | Roider, Anton |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 17 20 7715

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2018

| Im Recherchenbericht angeführtes Patentdokument | Datum der Veröffentlichung | Mitglied(er) der Patentfamilie | Datum der Veröffentlichung |
|---|---|---|---|
| EP 0208967 A1 | 21-01-1987 | KEINE | |
| WO 9839718 A1 | 11-09-1998 | AU 6686298 A<br>EP 0965092 A1<br>WO 9839718 A1 | 22-09-1998<br>22-12-1999<br>11-09-1998 |
| DE 102014003119 A1 | 03-09-2015 | KEINE | |
| CN 202854161 U | 03-04-2013 | KEINE | |
| US 5252915 A | 12-10-1993 | AT 186988 T<br>CA 2086641 A1<br>DE 69327066 D1<br>DE 69327066 T2<br>EP 0552991 A2<br>US 5252915 A | 15-12-1999<br>24-07-1993<br>30-12-1999<br>08-06-2000<br>28-07-1993<br>12-10-1993 |
| DE 102015102581 A1 | 27-08-2015 | CN 104964703 A<br>DE 102015102581 A1<br>US 2015241523 A1<br>US 2017227614 A1 | 07-10-2015<br>27-08-2015<br>27-08-2015<br>10-08-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0974822 B1
- EP 0800265 B1
- DE 3722805 C2